# EUROPEAN PATENT APPLICATION

(11) **EP 2 631 781 A1**
(43) Date of publication of application: **28.08.2013**
(21) Application number: 12156956.0
(22) Date of filing: 24.02.2012
(51) Int. Cl.: G06F 3/14, G09G 5/00, G09G 5/14

(54) **Device, system and method for generating display data**

(71) Applicant: Research In Motion Limited, Waterloo, ON N2L 3W8 (CA)
(72) Inventor: Eriksson, Marcus, Malmo 21140 (SE); Berglund, Carl Frederik Alexander, Malmo 21140 (SE)
(74) Representative: Carpmaels & Ransford LLP

(57) **Abstract**

A device for generating display data comprises memory configured to store application data, including application data pertaining to a first application executable on the device; an input interface configured to receive input; a processor in communication with the memory and input interface. The processor is configured to communicate with first and second display devices, generate and output first display data for display on the first display device, and generate and output second display data for display on the second display device, in accordance with the input. In a first mode, the processor is configured to generate the first and second display data based on the application data pertaining to the first application. In a second mode, the processor is configured to generate the first display data based on the application data, and to generate the second display data so as to include preconfigured display data for display on the second device.

## Description

### Technical Field

The embodiments disclosed herein relate to a device, system and method for generating display data. In particular, the embodiments relate to a device, system and method for generating first and second display data for display on first and second display devices, respectively.

### Background

Electronic devices are increasingly being used to generate a presentation, and are subsequently used by an individual (i.e. a presenter) to display a presentation and related data to other individuals (i.e. an audience). For example, a portable electronic device may be used by a presenter to cause a presentation to be displayed on a display device, for example on a display screen such as a liquid crystal or plasma display device, or on a projection screen via a projector.

A presenter will typically make a presentation by using the electronic device to cause a plurality of "slides" to be displayed in a predetermined order. Each slide is generally a discrete still frame containing data and information which is displayed on the display device for a period of time. The data and information may be presented within the slide as one or more of: text, in an image, in a video, or as other graphics.

Improvements to conventional electronic devices and methods for generating display data, such as for generating a presentation, are desirable.

### Brief Description of the Drawings

The present disclosure and the embodiments set out herein can be better understood with reference to the description of the embodiments set out below, in conjunction with the appended drawings which are:
Figure 1 is a schematic diagram illustrating components of an exemplary electronic device usable by a user in some embodiments;
Figure 2 is a plan view of the upper external side of one exemplary electronic device usable by an end-user in some embodiments;
Figure 3 is a plan view of the upper external side of one alternative exemplary electronic device usable by an end-user in some embodiments;
Figure 4 is a schematic diagram of an exemplary system in which the aforementioned electronic devices can be employed in some exemplary embodiments;
Figure 5 is a representation of a presentation whilst an exemplary electronic device is operating in a first mode;
Figure 6 is a representation of a presentation whilst the exemplary electronic device of figure 5 is operating in a second mode; and
Figure 7 is a screenshot based on the display data sent to the display device in Figure 6.

### Detailed Description

In some cases, the presenter's portable electronic device may show the presentation which is being displayed on the display device. In this case, the two displays show the same data and are said to be "mirrored". In other cases, the presenter's portable electronic device shows related content whilst the presentation is being displayed on the display device. The related content may be the presenter's notes, which may be changed as the slides displayed on the display device change to help the presenter make the presentation. Alternatively, the related content may include one or more controls for progressing or pausing the presentation.

It is not uncommon for a presenter to want to interrupt a presentation partway through. The presenter may wish to display another source of data to the audience, such as a web page or a video. Alternatively, the presenter may wish to make an alteration to the presentation; refer to another application or document on the portable electronic device; or check, send or receive an email. Usually, the presenter faced with such a situation must stop the presentation, at which point the display device displays to the audience the screen of the presenter's portable electronic device. This is particularly prevalent in the case where the display device is twinned with the presenter's portable device, in which case the audience will see exactly what is shown on the presenter's device, unless the presenter physically disconnects the device.

For informal presentations, this may be acceptable. However, in other circumstances it may be highly undesirable to display certain applications on the display device for the audience to see. For instance, the presenter may not wish for the audience to see the notes of a presentation, or the desktop of the display device, or the homepage of the presenter's web browser, or the presenter's email program. Such applications may include personal or sensitive data which is not suitable for display to a general audience.

Whilst the above problem has been framed in the context of a presentation, it is clear that it is equally applicable to other circumstances where a processor generates and outputs display data, based on application data, for display on a plurality of display devices. In such circumstances, it may be desirable to output different display data to at least one of the plurality of display devices.

Efforts are on-going to increase the efficiency and usability of electronic devices for generating and displaying presentations.

In one aspect, there is provided a device for generating display data comprising: memory configured to store application data; an input interface configured to receive input; a processor in communication with the memory and input interface. The processor is configured to communicate with first and second display devices, generate and output first display data for display on the first display device, and generate and output second display data for display on the second display device, in accordance with the input. The application data includes application data pertaining to a first application executable on the device. In a first mode, the processor is configured to generate the first and second display data based on the application data pertaining to the first application. In a second mode, the processor is configured to generate the first display data based on the application data, and to generate the second display data so as to include preconfigured display data for display on the second device.

By "display data" is meant data which is output by the processor in a form which can be understood and used by a display device to generate visual representations of the display data, perhaps on a screen.

By "application data" it is meant data created for or by a software application, for example a presentation application such as Blackberry® Presenter, Slideshow To Go, or Microsoft® PowerPoint®, with the application data perhaps being in the form of or including data from a file configured for use by that application, for example a PowerPoint® file.

By "application data pertaining to a first application executable on the device" it is meant data created for or by a particular software application, which may be any of the software applications mentioned in the preceding paragraph or any other software application.

Application data pertaining to a particular software application may provide the basis for a plurality of different display data. For instance, one set of display data which is based on a PowerPoint® presentation may be of one or more slides of the presentation itself. Another set of display data based on the same PowerPoint® presentation may be of an overview of the whole presentation.

By "mode" it is meant a particular condition in which the device and processor operate vis-a-vis the generation and output of display data.

By "preconfigured display data" it is meant a set of display data, wherein at least part of the data or at least part of the format, arrangement or source of the data exists in the memory of the device or is accessible by the processor of the device at the time of operating the device.

In one embodiment, the first and second display data may the same, or substantially the same, when the device is in the first mode. In that mode, the processor may be configured to output the first and second display data to both the first and second display devices for simultaneous, or near simultaneous, display therewith. In this embodiment, the first and second displays are said to be "mirrored".

The processor may be configured to transition between the first mode and the second mode upon receipt of a transition instruction at the input interface. The transition may be from the first mode to the second mode, or from the second mode to the first mode.

By "transition" it is meant a change in the mode of operation of the device.

By "transition instruction" it is meant a user-generated or computer-automated command parseable by the processor and configured to invoke a transition in the mode of operation. The instruction may be adapted to cause an immediate transition. In another embodiment, the instruction may be adapted to cause a transition after a pre-determined period of time has elapsed. In yet another embodiment, the instruction may be adapted to cause a transition once a predetermined set of criteria have been met. In yet another embodiment, the instruction may be adapted to cause a transition according to any other set of logical commands.

The processor may be configured to transition between the first mode and the second mode upon detection of a change in the application data on which the first display data is based. The transition may be from the first mode to the second mode, or from the second mode to the first mode.

By "change in the application data" it is meant a change in the source of the application data on which the first display data is based or a change in the content of the application data on which the first display data is based. The change may be from one set of data to another set of data, wherein both sets of data pertain to the same application, or from one set of data to another set of data which pertains to a different application.

The application data may include application data pertaining to a plurality of applications executable on the device. Moreover, each application may be associated with a flag, the status of which is indicative of the mode in which the processor should operate during execution of the respective application. In this case, the processor may be configured to transition between the first mode and the second mode depending on the status of the flag associated with the application being executed on the device. The transition may be from the first mode to the second mode, or from the second mode to the first mode.

The preconfigured display data may include, for example, components which are derived from one or more of the following: the first display data; the application data; the application data pertaining to the first application; application data pertaining to one or more of a plurality of applications executable on the device; data pertaining to input received at the input interface; and system data generated by the processor. Of course, components for inclusion in the preconfigured display data may be derived from any source in communication with the processor.

Alternatively, or in addition, the preconfigured display data may include components which are derived from the first or second display data generated by the processor prior to transitioning from the first mode to the second mode. The first or second display data from which the components are derived may be that which was generated by the processor immediately prior to transitioning from the first mode to the second mode, or which was generated by the processor at or during a pre-determined period of time prior to transitioning from the first mode to the second mode.

The preconfigured display data is generated according to a predefined set of instructions stored in the memory of the device.

The input interface of the device may comprise, or may be in communication with, one or more of the following: a mouse, a keyboard, a tracker ball, a keypad, one or more control buttons, a touch sensitive overlay, a camera, a microphone, a navigational input device, an orientation subsystem, a voice recognition subsystem, and a data port in communication with a remote device via a wired or wireless connection.

The first display device of the device may be a flat-screen, such as a liquid crystal display screen or a light emitting diode screen, integral to or forming part of the device. However, this is not essential, and the first display device may be integral to or forming part of a separate, remote device which is in communication with the processor of the device via a wired or wireless connection.

In another aspect, there is provided a system comprising the aforementioned device for generating display data; and first and second display devices configured to receive display data and generate a visual representation of the display data.

The second display device may be remote from the device and comprise one or more of a flat-screen, such as a liquid crystal display screen or a light emitting diode screen, and a projection system, including a forward or rear projector in combination with a forward or rear projection screen, for example. Moreover, the processor of the device may be in communication with the second display device via a wired or wireless connection.

As mentioned above, the first display device of the device may be a flat-screen, such as a liquid crystal display screen or a light emitting diode screen, integral to or forming part of the device. Alternatively, the first display device may be remote from the device and comprise a flat-screen, such as a liquid crystal display screen or a light emitting diode screen which is integral to or form part of a separate, remote device in communication with the device via a wired or wireless connection. In this arrangement, the remote device may be configured to transmit user input to the input interface of the device via the wired or wireless connection.

In another aspect, there is provided a method, which may be a computer-implemented method, comprising storing application data in a memory. The application data may including application data pertaining to a first application executable on the device. The method comprises receiving input from an input interface; and generating, by a processor in communication with the memory and input interface, first display data for display on a first display device and second display data for display on a second display device, in accordance with the input. In a first mode, the method comprises generating the first and second display data based on the application data pertaining to the first application. In a second mode, the method comprises generating the first display data based on the application data and generating the second display data so as to include preconfigured display data for displaying on the second device.

In the first mode, the first and second display data may the same or substantially the same, and the method may further comprise outputting the first and second display data to both the first and second display devices for simultaneous or near simultaneous display therewith. In this embodiment, the first and second displays are said to be "mirrored".

The method may further comprise receiving a transition instruction at the input interface; and, upon receipt of the transition instruction, transitioning between the first mode and the second mode. The method may include transitioning from the first mode to the second mode, or from the second mode to the first mode.

The method may further comprise detecting a change in the application data on which the first display data is based; and, upon detection of a change, transitioning between the first mode and the second mode. The method may include transitioning from the first mode to the second mode or from the second mode to the first mode.

The application data may include application data pertaining to a plurality of applications executable on the device. Moreover, each application may be associated with a flag, the status of which is indicative of the mode in which the processor should operate during execution of the respective application. The method may further comprise detecting the status of the flag associated with the application being executed on the device and transitioning between the first mode and the second mode based on the status of the flag. The method may include transitioning from the first mode to the second mode, or from the second mode to the first mode.

The method may further comprise deriving data from one or more of the following: the first display data; the application data; the application data pertaining to the first application; application data pertaining to one or more of a plurality of applications executable on the device; data pertaining to input received at the input interface; and system data generated by the processor. The method may further comprise generating components within the preconfigured display data based upon the derived data.

The method may further comprise deriving data from the first or second display data generated by the processor prior to transitioning from the first mode to the second mode; and generating components within the preconfigured display data based upon the derived data. The method may comprise deriving data from the first or second display data generated by the processor immediately prior to transitioning from the first mode to the second mode. Alternatively, the method may comprise deriving data from the first or second display data generated by the processor at or during a pre-determined period of time prior to transitioning from the first mode to the second mode.

The method may further comprise generating the preconfigured display data according to a predefined set of instructions stored in the memory of the device.

In another aspect, there is provided a computer program product comprising memory storing computer-executable instructions which, when executed by a processor, cause the processor to perform the aforementioned method.

This disclosure below is a description of one or more exemplary embodiments which are not intended to be limiting on the scope of the appended claims.

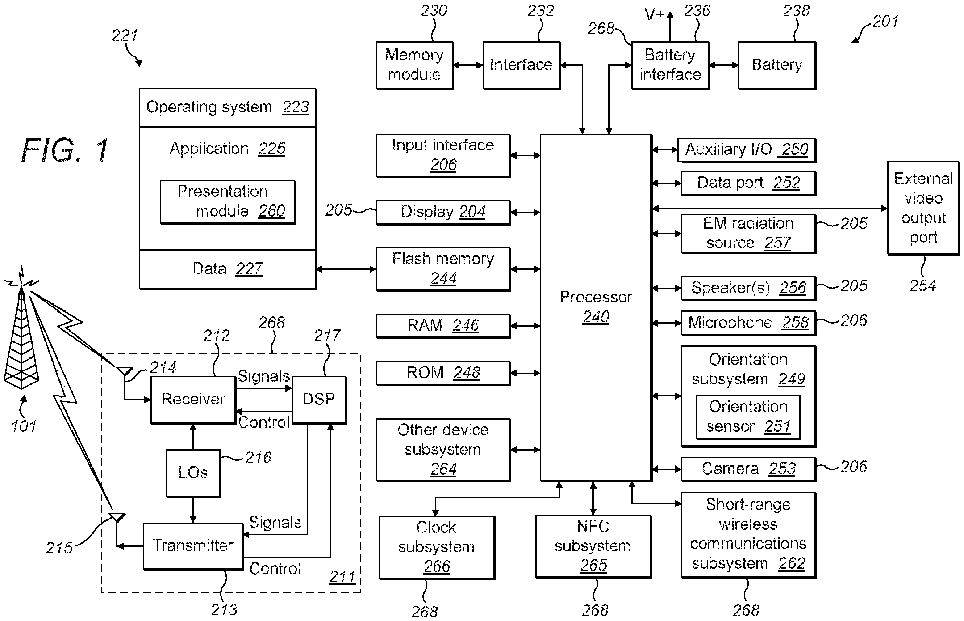

Reference is made to Figure 1 which illustrates an exemplary electronic device 201 which is usable in accordance with the disclosure below. An electronic device 201 such as the electronic device 201 of Figure 1 is configured to generate a presentation and user-controllable interface on a built-in local display or on a remote, external display device, or on a built-in local display and on a remote, external display device. In the context of this disclosure, the term "remote" means a display screen which is not built-in to the electronic device 201 and with which the electronic device 201 communicates via a physical wired connection or via a wireless connection. In the context of this disclosure, the term "presentation" means one or more frames containing one or more of: data, information and user-controllable components which are caused to be displayed successively on the display device by the electronic device.

It will be appreciated that, in other embodiments, some of the features, systems or subsystems of the electronic device 201 discussed below with reference to Figure 1 may be omitted from electronic devices 201 which are intended to perform solely operations in relation to the generation and display of presentations.

In the illustrated exemplary embodiment, the electronic device 201 is a communication device and, more particularly, is a mobile communication device having data and voice communication capabilities, and the capability to communicate with other computer systems; for example, via the Internet. It will be appreciated that the electronic device 201 may take other forms, including any one of the forms listed below. Depending on the functionality provided by the electronic device 201, in certain exemplary embodiments, the electronic device 201 is a multiple-mode communication device configured for both data and voice communication, a mobile telephone, such as a smartphone, a wearable computer such as a watch, a tablet computer, a personal digital assistant (PDA), or a computer system such as a notebook, laptop or desktop system. The electronic device 201 may take other forms apart from those specifically listed above. The electronic device may also be referred to as a mobile communications device, a communication device, a mobile device and, in some cases, as a device. In the context of this disclosure, the term "mobile" means the device is of a size or weight which makes it readily portable by a single individual, e.g. of a weight less than 5, 4, 3, 2,1, 0.5,0.4, 0.3, 0.2 or 0.1 kilograms, or of a volume less than 15,000,10,000, 5,000, 4,000, 3,000, 2,000,1,000, 500, 400, 300, 200,100, 90, 80, 70, 60, 50, 40, 30, 20, 10 or 5 cubic centimetres. As such, the device may be portable in a bag, or clothing pocket.

The electronic device 201 includes a controller including a processor 240 (such as a microprocessor) which controls the operation of the electronic device 201. In certain electronic devices, more than one processor is provided, with each processor in communication with each other and configured to perform operations in parallel, so that they together control the overall operation of the electronic device. The processor 240 interacts with device subsystems, such as a wireless communication subsystem 211 for exchanging radio frequency signals with a wireless network 101 to perform communication functions. The processor 240 is communicably coupled with additional device subsystems including one or more output interfaces 205 (such as one or more of: a local display 204, a speaker 256, an electromagnetic (EM) radiation source 257), one or more input interfaces 206 (such as one or more of: a camera 253, microphone 258, keyboard (not shown), control buttons (not shown), a navigational input device (not shown), a touch-sensitive overlay (not shown)) associated with a touchscreen 204, an orientation subsystem 249, memory (such as flash memory 244, random access memory (RAM) 246, read only memory (ROM) 248, etc.), auxiliary input/output (I/O) subsystems 250, a data port 252 (which may be a serial data port, such as a Universal Serial Bus (USB) data port), an external video output port 254, a near field communications (NFC) subsystem 265, a short-range communication subsystem 262 and other device subsystems generally designated as 264. Some of the subsystems shown in Figure 1 perform communication-related functions, whereas other subsystems may provide "resident" or on-device functions.

The electronic device 201 stores data 227 in an erasable persistent memory, which in one exemplary embodiment is the flash memory 244. In various exemplary embodiments, the data 227 includes service data including information required by the electronic device 201 to establish and maintain communication with the wireless network 101. The data 227 may also include user application data such as email messages, address book and contact information, calendar and schedule information, notepad documents, presentation documents and information, word processor documents and information, spread sheet documents and information; desktop publishing documents and information, database files and information; image files, video files, audio files, internet web pages, and other commonly stored user information stored on the electronic device 201 by its user, and other data. The data may also include program application data such as functions, controls and interfaces from an application such as an email application, an address book application, a calendar application, a notepad application, a presentation application, a word processor application, a spread sheet application, a desktop publishing application, a database application, a media application such as a picture viewer, a video player or an audio player, and a web browser. The data 227 stored in the persistent memory (e.g. flash memory 244) of the electronic device 201 may be organized, at least partially, into one or more databases or data stores. The databases or data stores may contain data items of the same data type or associated with the same application. For example, email messages, contact records, and task items may be stored in individual databases within the device memory.

The electronic device 201 includes a clock subsystem 266 comprising a system clock configured to measure system time. In one example, the system clock comprises its own alternate power source. The system clock provides an indicator of a current time value, the system time, represented as a year/month/day/hour/minute/second/milliseconds value. In other examples, it additionally or alternatively provides an indicator of the current time value represented as a count of the number of ticks of known duration since a particular epoch.

The local display 204 receives local display data generated by the processor 240, such that the local display 204 displays certain application data stored as a segment of the data 227 from the memory (any of the flash memory 244, random access memory (RAM) 246, read only memory (ROM) 248) in a predetermined way on local display screen (not shown) of the display 204, according to the processing performed by the processor 240.

In certain exemplary embodiments, the external video output port 254 is integrated with the data port 252. The external video output port 254 is configured to connect the electronic device 201 via a wired connection (e.g. video graphics array (VGA), digital visual interface (DVI) or high definition multimedia interface (HDMI)) to an external (or remote) display device 290 which is separate and remote from the electronic device 201 and its local display 204. The external display device may be an external display screen, such as an LED or LCD screen, or it may be a projector configured to project an image onto a projection screen. The processor 240 outputs external display data generated by the processor 240 via the external video output port 254, such that the external display device 290 can display application data from the memory module in a predetermined way on an external display screen (not shown) of the external display device 290. The processor 240 may also communicate the external display data to the external display device 290 in an identical fashion over a wireless communications path (see below).

At any given time, the local display data and the external display data generated by the processor 240 may be identical or substantially similar for a predetermined period of time, but may also differ for a predetermined period of time, with the processor 240 controlling whether the local display data and the external display data are identical or differ based on input from one or more of the input interfaces 206. In this context, the word "identical" means that both sets of data comprise similar content so as to generate an identical or substantially similar display at the same time on both the external display device 290 and the local display 204. In this context, the word "differ" means that the external display data and local display data are not identical; this is to say that these data may (but not necessarily) include identical elements of data, for example representative of the same application data, but the external display data and local display data are not wholly identical. Hence, the display on both the external display device 290 and the local display 204 is not wholly identical, although similar or identical individual items of content based on the application data may be displayed on both the external display device 290 and the local display 204. This is explained further below.

In at least some exemplary embodiments, the electronic device 201 includes a touchscreen which acts as both an input interface 206 (i.e. touch- sensitive overlay) and an output interface 205 (i.e. display). The touchscreen may be constructed using a touch-sensitive input surface which is connected to an electronic controller and which overlays the local display 204. The touch-sensitive overlay and the electronic controller provide a touch-sensitive input interface 206 and the processor 240 interacts with the touch-sensitive overlay via the electronic controller. In at least some exemplary embodiments, the touch-sensitive overlay has a touch-sensitive input surface which is larger than the local display 204. For example, in at least some exemplary embodiments, the touch-sensitive overlay may extend overtop of a frame (not shown) which surrounds the local display 204. In such exemplary embodiments, the frame (not shown) may be referred to as an active frame since it is capable of acting as an input interface 206. In at least some exemplary embodiments, the touch-sensitive overlay may extend to the sides of the electronic device 201.

As noted above, in some exemplary embodiments, the electronic device 201 includes a communication subsystem 211 which allows the electronic device 201 to communicate over a wireless network 101. The communication subsystem 211 includes a receiver 212, a transmitter and associated components, such as one or more antenna elements 214 and 215, local oscillators (LOs) 216, and a processing module such as a digital signal processor (DSP) 217 which is in communication with the processor 240. The antenna elements 214 and 215 may be embedded or internal to the electronic device 201 and a single antenna may be shared by both receiver and transmitter. The particular design of the wireless communication subsystem 211 depends on the wireless network 101 in which electronic device 201 is intended to operate.

As mentioned above, the processor 240 can communicate the external display data to the external display device 290 wirelessly. In such an embodiment, the processor 240 transmits the external display data to the DSP 217 in the communication subsystem 211. The transmitter 213 receives the external display data from the DSP 217 and transmits it to the external display device 290 which contains a receiver (not shown). In this context, the external display data may be transmitted in packets over the wireless network 101 to the external display device 290, which resides on the wireless network 101, according to a wireless network standard, such as IEEE 802.11. Alternatively, the external display data may be wirelessly transmitted directly to the receiver in the external display device 290.

In at least some exemplary embodiments, the electronic device 201 communicates with any one of a plurality of fixed transceiver base stations of the wireless network 101 within its geographic coverage area. The electronic device 201 may send and receive communication signals over the wireless network 101 after the required network registration or activation procedures have been completed. Signals received by the antenna 214 through the wireless network 101 are input to the receiver 212, which may perform such common receiver functions as signal amplification, frequency down conversion, filtering, channel selection, etc., as well as analogue-to-digital (AID) conversion. A/D conversion of a received signal allows more complex communication functions such as demodulation and decoding to be performed in the DSP 217. In a similar manner, signals to be transmitted are processed, including modulation and encoding, for example, by the DSP 217. These DSP-processed signals are input to the transmitter 213 for digital-to-analogue (D/A) conversion, frequency up conversion, filtering, amplification, and transmission to the wireless network 101 via the antenna 215. The DSP 217 not only processes communication signals, but may also provide for receiver and transmitter control. For example, the gains applied to communication signals in the receiver 212 and the transmitter 213 may be adaptively controlled through automatic gain control algorithms implemented in the DSP 217.

In some exemplary embodiments, the auxiliary input/output (I/O) subsystems 250 includes an external communication link or interface; for example, an Ethernet connection. The electronic device 201 may include other wireless communication interfaces for communicating with other types of wireless networks; for example, a wireless network such as an orthogonal frequency division multiplexed (OFDM) network. The auxiliary I/O subsystems 250 may include a vibrator for providing vibratory notifications in response to various events on the electronic device 201 such as receipt of an electronic communication or incoming phone call, or for other purposes such as haptic feedback (touch feedback).

In some exemplary embodiments, the electronic device 201 also includes a removable memory module 230 (typically including flash memory, such as a removable memory card) and a memory interface 232. Network access may be associated with a subscriber or user of the electronic device 201 via the memory module 230, which may be a Subscriber identity Module (SIM) card for use in a GSM network or other type of memory card for use in the relevant wireless network type. The memory module 230 is inserted in or connected to the memory card interface 232 of the electronic device 201 in order to operate in conjunction with the wireless network 101.

The data port 252 may be used for synchronization with a user's host computer system (not shown). The data port 252 enables a user to set preferences through an external device or software application and extends the capabilities of the electronic device 201 by providing for information or software downloads to the electronic device 201 other than through the wireless network 101. The alternate download path may for example, be used to load an encryption key onto the electronic device 201 through a direct, reliable and trusted connection to thereby provide secure device communication.

In at least some exemplary embodiments, the electronic device 201 also includes a device orientation subsystem 249 including at least one orientation sensor 251 which is connected to the processor 240 and which is controlled by one or a combination of a monitoring circuit and operating software. The orientation sensor 251 detects the orientation of the device 201 or information from which the orientation of the device 201 can be determined, such as acceleration. In some exemplary embodiments, the orientation sensor 251 is an accelerometer, such as a three-axis accelerometer. An accelerometer is a sensor which converts acceleration from motion (e.g. movement of the device 201 or a portion thereof due to the strike force) and gravity which are detected by a sensing element into an electrical signal (producing a corresponding change in output). Accelerometers may be available in one, two or three axis configurations. Higher order axis configurations are also possible. Accelerometers may produce digital or analogue output signals depending on the type of accelerometer.

An orientation sensor 251 may generate orientation data which specifies the orientation of the electronic device 201. The orientation data, in at least some exemplary embodiments, specifies the orientation of the device 201 relative to the gravitational field of the earth.

In some exemplary embodiments, the orientation subsystem 249 includes other orientation sensors 251, instead of or in addition to accelerometers. For example, in various exemplary embodiments, the orientation subsystem 249 may include a gravity sensor, a gyroscope, a tilt sensor, an electronic compass or other suitable sensor, or combinations thereof. In some exemplary embodiments, the device orientation subsystem 249 may include two or more orientation sensors 251 such as an accelerometer and an electronic compass.

The electronic device 201, in at least some exemplary embodiments, includes a near field communications (NFC) subsystem 265. The NFC subsystem 265 is configured to communicate with other electronic devices 201 or tags, using an NFC communications protocol. NFC is a set of short-range wireless technologies which typically require a distance of 4 cm or less for communications. The NFC subsystem 265 may include an NFC chip and an NFC antenna.

The electronic device 201 includes a microphone or one or more speakers. In at least some exemplary embodiments, an electronic device 201 includes a plurality of speakers 256. For example, in some exemplary embodiments, the electronic device 201 includes two or more speakers 256. The two or more speakers 256 may, for example, be disposed in spaced relation to one another. That is, in at least some exemplary embodiments, the electronic device 201 may include a first speaker and a second speaker and the first speaker and the second speaker may be spatially separated from one another within the electronic device 201. In at least some exemplary embodiments, the local display 204 may be disposed between the first speaker and the second speaker of the electronic device. In such exemplary embodiments, the first speaker may be located at one side of the local display 204 and the second speaker may be located at another side of the display which is opposite the side of the display where the first speaker is located. For example, the first speaker may be disposed at a left side of the display and the second speaker may be disposed at a right side of the display.

In at least some exemplary embodiments, each speaker 256 is associated with a separate audio channel. The multiple speakers may, for example, be used to provide stereophonic sound (which may also be referred to as stereo).

The electronic device 201 may also include one or more cameras 253. The one or more cameras 253 may be capable of capturing images in the form of still photographs or motion video.

In at least some exemplary embodiments, the electronic device 201 includes a front facing camera 253. A front facing camera is a camera which is generally located on a front face of the electronic device 201. The front face is typically the face on which a local display 204 is mounted. That is, the local display 204 is configured to display content which may be viewed from a side of the electronic device 201 where the camera 253 is directed. The front facing camera 253 may be located anywhere on the front surface of the electronic device; for example, the camera 253 may be located above or below the local display 204. The camera 253 may be a fixed position camera which is not movable relative to the local display 204 of the electronic device 201 or the housing of the electronic device 201. In such exemplary embodiments, the direction of capture of the camera is always predictable relative to the local display 204 or the housing. In at least some exemplary embodiments, the camera may be provided in a central location relative to the local display 204 to facilitate image acquisition of a face.

In at least some exemplary embodiments, the electronic device 201 includes an electromagnetic (EM) radiation source 257. In at least some exemplary embodiments, the EM radiation source 257 is configured to emit electromagnetic radiation from the side of the electronic device which is associated with a camera 253 of that electronic device 201. For example, where the camera is a front facing camera 253, the electronic device 201 may be configured to emit electromagnetic radiation from the front face of the electronic device 201. That is, in at least some exemplary embodiments, the electromagnetic radiation source 257 is configured to emit radiation in a direction which may visible by the camera. That is, the camera 253 and the electromagnetic radiation source 257 may be disposed on the electronic device 201 so that electromagnetic radiation emitted by the electromagnetic radiation source 257 is visible in images obtained by the camera.

In some exemplary embodiments, the electromagnetic radiation source 257 is an infrared (IR) radiation source which is configured to emit infrared radiation. In at least some exemplary embodiments, the electromagnetic radiation source 257 may be configured to emit radiation which is not part of the visible spectrum. The camera 253 may be a camera which is configured to capture radiation of the type emitted by the electromagnetic radiation source 257. Accordingly, in at least some exemplary embodiments, the camera 253 is configured to capture at least some electromagnetic radiation which is not in the visible spectrum.

In some exemplary embodiments, the electronic device 201 is provided with a service routing application programming interface (API) which provides an application with the ability to route traffic through a serial data (i.e., USB) or Bluetooth® (Bluetooth® is a registered trademark of Bluetooth SIG, Inc.) connection to a host computer system using standard connectivity protocols. When a user connects their electronic device 201 to the host computer system via a USB cable or Bluetooth® connection, traffic that was destined for the wireless network 101 is automatically routed to the electronic device 201 using the USB cable or Bluetooth® connection. Similarly, any traffic destined for the wireless network 101 is automatically sent over the USB cable Bluetooth® connection to the host computer system for processing.

The electronic device 201 also includes a battery 238 as a power source, which is typically one or more rechargeable batteries that may be charged for example, through charging circuitry coupled to a battery interface 236 such as the data port 252. The battery 238 provides electrical power to at least some of the electrical circuitry in the electronic device 201, and the battery interface 236 provides a mechanical and electrical connection for the battery 238. The battery interface 236 is coupled to a regulator (not shown) which provides power V+ to the circuitry of the electronic device 201.

The electronic device 201 includes a short-range communication subsystem 262 which provides for wireless communication between the electronic device 201 and other electronic devices 201. In at least some exemplary embodiments, the short-range communication subsystem 262 is a wireless bus protocol compliant communication mechanism such as a Bluetooth® communication module to provide for communication with similarly-enabled systems and devices.

The electronic device 201 is, in some exemplary embodiments, a mobile communication device which may provide two principal modes of communication: a data communication mode and a voice communication mode. In the data communication mode, a received data signal such as a text message, an email message, or Web page download will be processed by the communication subsystem 211 and input to the processor 240 for further processing. For example, a downloaded Web page may be further processed by a browser application or an email message may be processed by an email messaging application and output to the local display 204. A user of the electronic device 201 can compose data items, such as email messages; for example, using the input devices in conjunction with the local display 204. These composed items may be transmitted through the communication subsystem 211 over the wireless network 101.

In the voice communication mode, the electronic device 201 provides telephony functions and operates as a typical cellular phone. The overall operation is similar, except that the received signals would be output to the speaker 256 and signals for transmission would be generated by a transducer such as the microphone 258. The telephony functions are provided by a combination of software/firmware (i.e., a voice communication module) and hardware (i.e., the microphone 258, the speaker 256 and input interfaces 206). Alternative voice or audio I/O subsystems, such as a voice message recording subsystem, may also be implemented on the electronic device 201. Although voice or audio signal output is typically accomplished primarily through the speaker 256, the display screen 204 may also be used to provide an indication of the identity of a calling party, duration of a voice call, or other voice call related information.

The processor 240 operates under stored program control and executes software modules 221 stored in memory such as persistent memory; for example, in the flash memory 244. As illustrated in Figure 1, the software modules 221 include operating system software 223 and other software applications 225 such as presentation module 260. In the exemplary embodiment of Figure 1, the presentation module 260 is implemented as a stand-alone application 225. However, in other exemplary embodiments, the presentation module 260 could be implemented as part of the operating system 223 or other applications 225.

The memory is configured to store preconfigured display data, as will be discussed further below. The processor is configured to generate display data so as to include the preconfigured display data, and output the display data including the preconfigured display data to one or more local or external display devices.

The processor 240 is configured to generate preconfigured display data based on data from any available user application data or program application data (including the application data mentioned above) stored in the memory (any of the flash memory 244, random access memory (RAM) 246, read only memory (ROM) 248). Moreover, the processor 240 is configured to generate preconfigured display data based on data received from remote devices to which the processor is connected (via any of the auxiliary input/output 250, data port 252, input interface 206, microphone 258, orientation subsystem 249, camera 253, short-range wireless communications subsystem 262, NFC subsystem 265, clock subsystem 266).

The processor 240 is configured to generate preconfigured display data in accordance with a set of instructions stored in the memory (any of the flash memory 244, random access memory (RAM) 246, read only memory (ROM) 248). The instructions may, when executed by the processor, cause the processor to obtain application data from any of the locations described in the preceding paragraph and generate display data based on the application data in a preconfigured format. The instructions may be configurable by a user.

As discussed above, electronic devices 201 which are configured to perform operations in relation to a communications log may take a variety of forms. In at least some exemplary embodiments, one or more of the electronic devices which are configured to perform operations in relation to the presentation module 260 are a smart phone or a tablet computer.

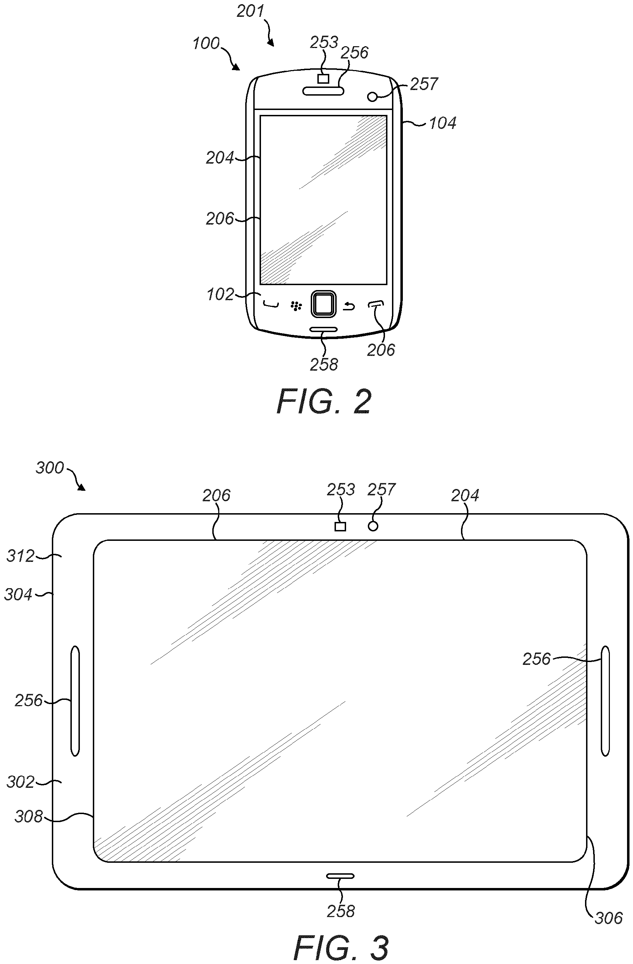

Referring now to Figure 2, a front view of an exemplary electronic device 201 which is a smartphone 100 is illustrated. The smartphone 100 is a mobile phone which offers more advanced computing capability than a basic non-smartphone cellular phone. For example, the smartphone 100 may have the ability to run third party applications which are stored on the smartphone.

The smartphone 100 includes all of the components discussed above with reference to Figure 1, or a subset of those components. The smartphone 100 includes a housing 104 which houses at least some of the components discussed above with reference to Figure 1.

In the exemplary embodiment, the smartphone includes a local display 204, which may be a touchscreen which acts as an input interface 206. The local display 204 is disposed within the smartphone 100 so that it is viewable at a front side 102 of the smartphone 100. That is, a viewable side of the local display 204 is disposed on the front side 102 of the smartphone. In the exemplary embodiment illustrated, the local display 204 is framed by the housing 104.

The example smartphone 100 also includes other input interfaces 206 such as one or more buttons, keys or navigational input mechanisms. In the example illustrated, at least some of these additional input interfaces 206 are disposed for actuation at a front side 102 of the smartphone.

The example smartphone also includes a speaker 256. In the exemplary embodiment illustrated, the smartphone includes a single speaker 256 which is disposed vertically above the local display 204 when the smartphone 100 is held in a portrait orientation where its height is longer than its width. The speaker 256 may be disposed on the front face of the smartphone 100.

While the example smartphone 100 of Figure 2 includes a single speaker 256, in other exemplary embodiments, the smartphone 100 may include a greater number of speakers 256. For example, in at least some exemplary embodiments, the smartphone 100 may include a second speaker 256 which is disposed vertically below the local display 204 when the smartphone is held in a portrait orientation where its height is longer than its width (i.e. the orientation illustrated in Figure 2).

The example smartphone 100 also includes a microphone 258. In the example illustrated, the microphone 258 is vertically disposed below the local display 204 when the smartphone is held in the portrait orientation. The microphone 258 and at least one speaker 256 may be arranged so that the microphone is in close proximity to a user's mouth and the speaker 256 is in close proximity to a user's ear when the user holds the phone to their face to converse on the smartphone.

The example smartphone 100 also includes a front facing camera 253 which may be located vertically above the local display 204 when the smartphone 100 is held in a portrait orientation where its height is longer than its width. The front facing camera 253 is located so that it may capture images of objects which are located in front of or surrounding the front side of the smartphone 100.

The example smartphone 100 also includes an electromagnetic radiation source 257. The electromagnetic radiation source 257 is disposed on the front side 102 of the smartphone 100. In this orientation, electromagnetic radiation which is produced by the electromagnetic radiation source 257 may be projected onto objects which are located in front of or surrounding the front side of the smartphone 100. Such electromagnetic radiation (or the projection of electromagnetic radiation onto objects) may be captured on images obtained by the camera 253.

Referring now to Figure 3, a front view of an example electronic device which, in one example may be a tablet computer 300, is illustrated. The tablet computer 300 may include the components discussed above with reference to Figure 1 or a subset of those components. The tablet computer 300 includes a housing 304 which houses at least some of the components discussed above with reference to Figure 1.

The tablet computer 300 includes a local display 204, which may be a touchscreen which acts as an input interface 206. The local display 204 is disposed within the tablet computer 300 so that it is viewable at a front side 302 of the tablet computer 300. That is, a viewable side of the local display 204 is disposed on the front side 302 of the tablet computer 300. In the exemplary embodiment illustrated, the local display 204 is framed by the housing 304.

A frame 312 surrounds the local display 204. The frame 312 may be a portion of the housing 304 which provides a border around the local display 204. In at least some exemplary embodiments, the frame 312 is an active frame 312. That is, the frame has a touch sensitive overlay which allows the electronic device 201 to detect a touch applied to the frame thus allowing the frame 312 to act as an input interface 206 (Figure 1).

The exemplary tablet computer 300 includes a plurality of speakers 256. In the exemplary embodiment illustrated, the tablet includes two speakers 256. The two speakers 256 are disposed on opposing sides of the local display 204. More particularly, when the tablet computer 300 is held in a landscape orientation (such as the orientation illustrated in Figure 3) where its width is longer than its height, one of the two speakers is disposed on a right side 306 of the display 204 and one of the speakers is disposed on the left side 308 of the local display 204. Both speakers 256 are disposed on the front side 302 of the tablet computer 300.

The exemplary tablet computer 300 also includes a microphone 258. In the example illustrated, the microphone 258 is vertically disposed below the local display 204 when the tablet computer is held in the landscape orientation illustrated in Figure 3. The microphone 258 may be located in other locations in other exemplary embodiments.

The exemplary tablet computer 300 also includes a front facing camera 253 which may be located vertically above the local display 204 when the tablet computer 300 is held in a landscape orientation (i.e. the orientation of Figure 3). The front facing camera 253 is located so that it may capture images of objects which are located in front of or surrounding the front side of the tablet computer 300.

The example tablet computer 300 also includes an electromagnetic radiation source 257. The electromagnetic radiation source 257 is disposed on the front side 304 of the tablet computer 300. In this orientation, electromagnetic radiation which is produced by the electromagnetic radiation source 257 may be projected onto objects which are located in front of or surrounding the front side 302 of the tablet computer 300. Such electromagnetic radiation (or the projection of electromagnetic radiation onto objects) may be captured on images obtained by the camera 253.

The tablet computer 300 may have the ability to run third party applications which are stored on the tablet computer.

The electronic device 201, which may be tablet computer 300, is usable by an end-user to send and receive communications using electronic communication services supported by a service provider.

The end-user of an electronic device 201 may send and receive communications with different entities using different electronic communication services. Those services may or may not be accessible using one or more particular electronic devices. For example, a communication source of an end-user's text messages sent and received by an end-user using a particular electronic device 201 having a particular memory module 230, such as a USIM, may be accessible using that device 201, but those text messages may not be accessible using another device having a different memory module. Other electronic communication sources, such as a web-based email account, may be accessible via a web-site using a browser on any internet-enabled electronic device.

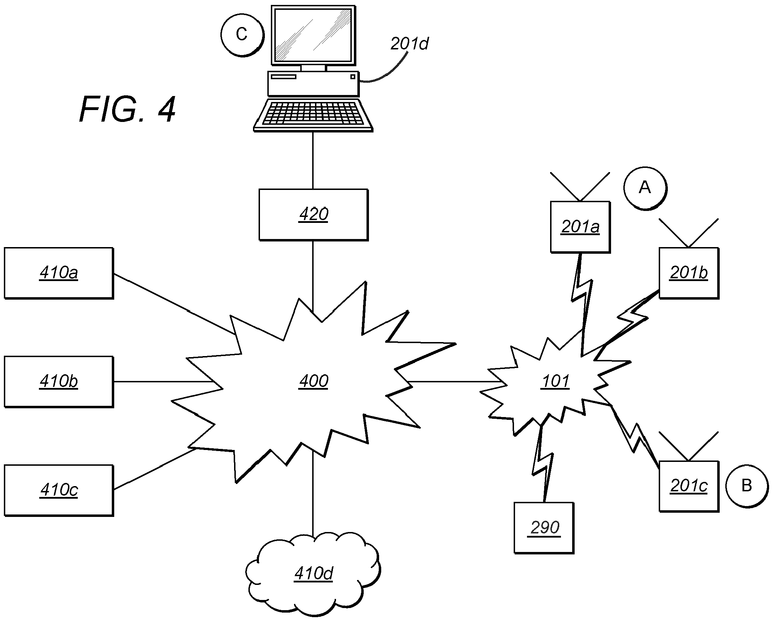

Figure 4 shows a system of networked apparatus by which electronic communications can be sent and received using multiple electronic devices 201a, 201b, 201c. Referring to Figure 4, electronic devices 201a, 201b and 201c are connected to wireless network 101 to perform voice and data communications, and to transmit data to an external display device 290 residing on the wireless network. Wireless network 101 is also connected to the Internet 400. Electronic device 201 may be a tablet computer similar to tablet computer 300 described in Figure 2 above. Electronic devices 201b and 201c may be smartphones. Electronic device 201d is a computing device such as a notebook, laptop or desktop, which is connected by a wired broadband connection to Local Area Network 420, and which is also connected to the Internet 400. Electronic devices 201a, b, c, d may access the Internet 400 to perform data communications therewith.

Servers 410a, 410b, 410c, 410d are also connected to the Internet 400 and one or more of them may individually or together support electronic communications services available to end-users of electronic devices 201a, 201b, 201c and 201d, enabling them to send and receive electronic communications. Servers 410a, 410b, 410c, 410d may be web servers or communications servers, such as email servers.

Other servers and services may of course be provided allowing users of electronic devices 201a, 201b, 201c and 201d to send and receive electronic communications by, for example, Voice over IP phone calls, video IP calls, video chat, group video chat, blogs, file transfers, instant messaging, and feeds.

Wireless network 101 may also support electronic communications without using Internet 400. For example, a user of smart phone 201b may use wireless network 101 to make telephony calls, video calls, send text messages, send multimedia messages, and send instant messages to smart phone 201c, and to display application data on a display screen of the external display device 290, or control the display of application data.

The example shown in Figure 4 is intended to be non-limiting and additional network infrastructure may of course be provided, such as a Public Switched Telephone Network (not shown), which may be used, for example, to make telephony calls using smartphone 201b to a wired phone (not shown).

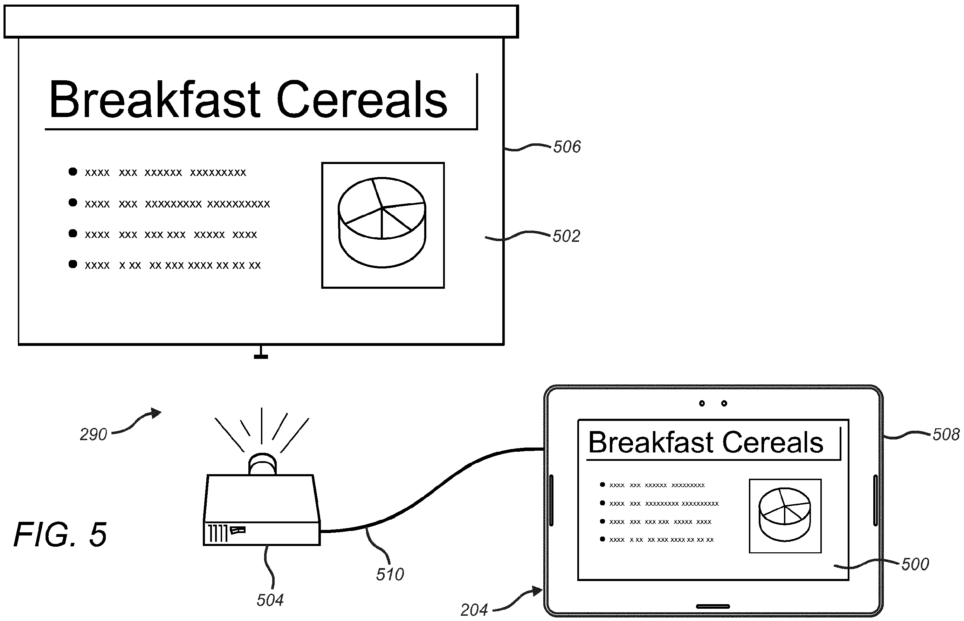

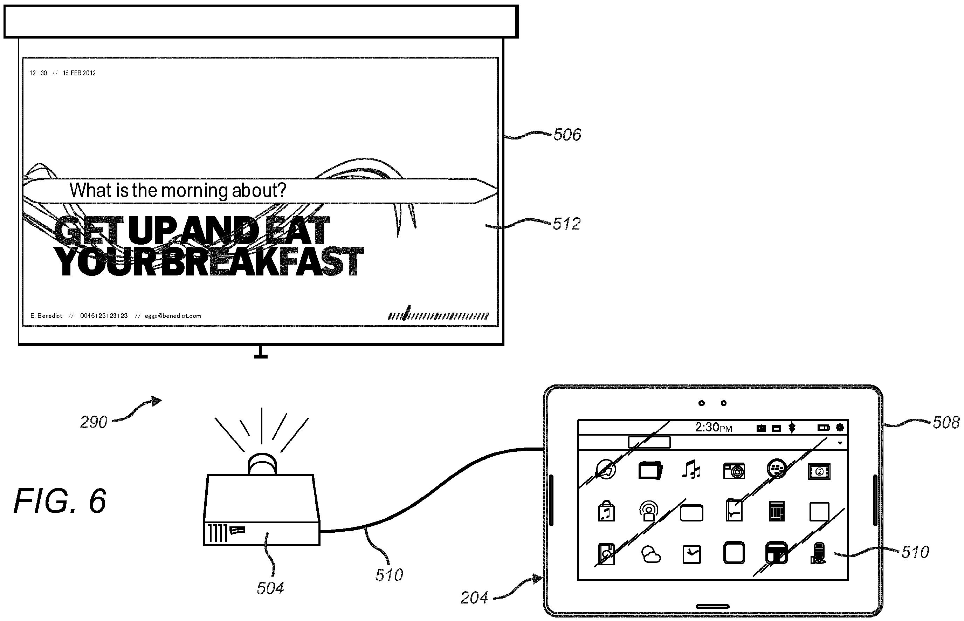

As illustrated in Figures 5 and 6, the processor 240 is configured to generate local display data and output the local display data to the local display device 204 to create a local visual representation of the local display data. Moreover, the processor 240 is configured to generate external display data and output the external display data to the external display device 290 to create an external visual representation 502 of the external display data.

In the examples shown in Figures 5 and 6, the local display device 204 is a tablet computer 508 and the external display device 290 comprises a projector 504 configured to project the external visual representation 502 onto a projection screen 506. However, the local and external display devices may be any suitable device, as explained above. Moreover, the tablet computer 508 is connected to the projector 504 of the external display device 290 using a wire forming part of cable 510, which may be an HDMI cable, for instance. However, the local and external display devices may communicate with each other using any suitable media, as explained above.

The processor may operate in one of at least two modes. In the first mode, an example of which is shown in Figure 5, the local display data and the external display data are based on application data pertaining to the same application. For instance, the local display data and the external display data may be exactly the same (in which case the local display and external display are said to be "mirrored"), and may be based on application data contained in a presentation file executed by presentation software such as Microsoft® Powerpoint®. As can be seen in Figure 4, the presenter operating the tablet computer 508 is shown exactly the same visual representation 500 as the visual representation 502 shown to the audience on the projection screen 506. In this example, the visual representation is a slide from the presentation file.

In an alternative example (not shown), the local display data and the external display data may be different, and yet based on application data pertaining to the same application. In this case, the screens are not said to be "mirrored". For instance, the local display data and the external display data may be based on application data contained in a presentation file executed by presentation software such as Microsoft® Powerpoint®, yet the external display data may be based on application data pertaining to a slide of the presentation whilst the local display data may be based on application data pertaining to controls of the presentation software, such controls configured to navigate through the presentation. In this example, the presenter operating the tablet computer 508 is shown a visual representation 500 of the controls to enable the presenter to navigate the presentation from the tablet computer 508, whilst the audience is shown a visual presentation of the slide from the presentation file.

In an alternative example (also not shown) wherein the local display data and the external display data are different yet based on application data pertaining to the same application, the external display data may be based on application data pertaining to a slide of a presentation whilst the local display data may be based on application data pertaining to an overview of at least some of the total number slides of the presentation. In this example, the presenter operating the tablet computer 508 is shown a visual representation 500 of the slides to enable the presenter to scroll through the presentation from the tablet computer 508, whilst the audience is shown a visual presentation of one slide from the presentation file.

In the second mode, an example of which is shown in Figure 6, the local display data is based on any application data stored in the memory or accessible to the processor of the device. For instance, the local display data may be based on application data from the operating system of the tablet computer 508 or from another application executed on the tablet computer 508, such as one or more of an email application, an address book application, a calendar application, a notepad application, a presentation application, a word processor application, a spreadsheet application, a desktop publishing application, a database application, a media application such as a picture viewer, a video player or an audio player, a web browser, or any other application. Accordingly, in this example, in the second mode, the presenter operating the tablet computer 508 is shown a visual representation 510 of the operating system of the tablet computer 508, or a visual representation of any other application mentioned above.

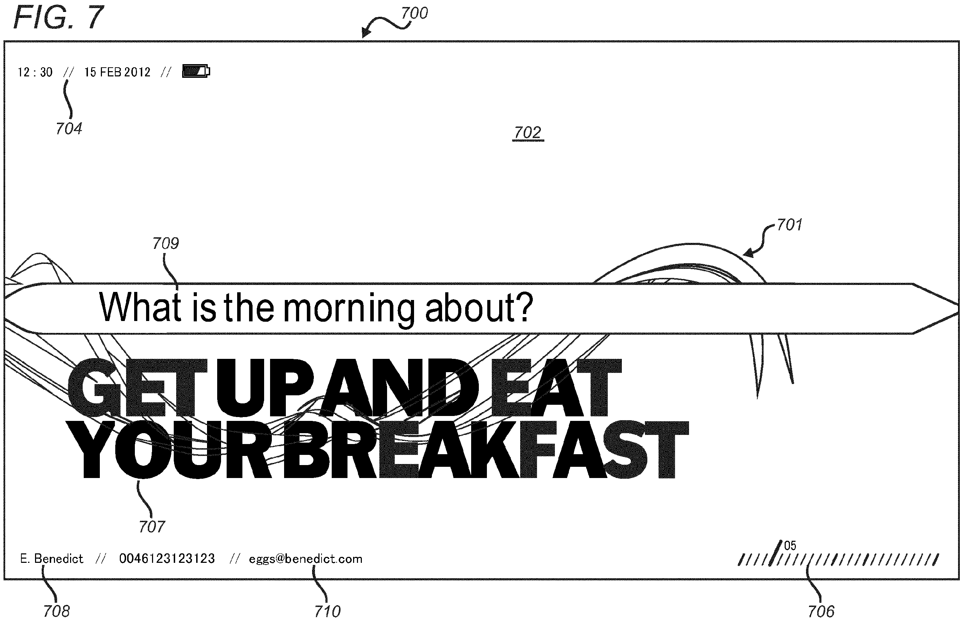

Whilst the local display data may be based on any application data in the second mode, the external display data is generated so as to include preconfigured display data. Accordingly, in this example, the audience is shown a visual representation 512 of the preconfigured display data, an example of which is explained in more detail in reference to Figure 7 below.

According to the embodiment shown in Figure 7, the preconfigured display data produces a visual representation of a presentation slide 700 which contains application data taken from a variety of sources. The preconfigured display data used to generate the presentation slide 700 includes application data associated with the presentation itself; for example its title 709 and subtitle 707; the background image or colour 702 used in the presentation; an image or animation 701 used in the presentation or stored elsewhere in the memory. The application data associated with the presentation itself not only includes the content of the textual and image data, but also the format of the data such as the colours, sizes, fonts, spacings and other format data; and metadata about the presentation, such as how far through the presentation is. Although not shown, the preconfigured display data used to generate the presentation slide 700 slide may also comprise or consist of application data including a video file or audio file stored on the memory of the device or elsewhere, or any other media file.

As well as the application data associated with the presentation itself, the preconfigured display data used to generate the presentation slide 700 slide includes application data from other applications; for example, contact details 708,710 from an address book or contact information; and the time, date and remaining battery life 704 from the computer system data.

When generating the second display data in the second mode, the processor calls a set of instructions stored in the memory of the device. The instructions, when executed by the processor, cause the processor to obtain application data and generate display data in a preconfigured format. In the example shown in Figure 7, the instructions stored in the memory cause the processor to obtain the following:
1. the title of the presentation and its font, font size and font spacing, taken from the presentation file;
2. the subtitle of the presentation and its font, font size and font spacing, taken from the presentation file;
3. the background image or colour, taken from the presentation file;
4. a background image or animation and its size and aspect ratio, taken from the presentation file or stored in the memory of the local device;
5. information concerning the present slide number and total number of slides, taken from the presentation application;
6. the name, telephone number and email address of the presenter, taken from the contact information stored in the memory of the local device;
7. the time, date and remaining battery life, taken from the system information of the local device.

Once the seven pieces of application data have been obtained, processor generates the second display data so as to cause the above pieces of information to be displayed in a preconfigured format, again in accordance with the instructions. In the example shown in Figure 7, the instructions cause the processor to generate display data wherein the contact details of the presenter and the information concerning the present slide number and total number of slides are shown at the bottom of the presentation slide 700, whilst the time and date are shown at the top of the presentation slide 700.

It will be appreciated that, in other embodiments, the preconfigured display data may not be based on a presentation slide 700, and may instead be based on application data taken from any suitable application, as described above. Moreover, it will be appreciated that, in other embodiments, the content and format of the application data on which the preconfigured display data is based may be any suitable content and any suitable format, as described above.

The processor of the device is configured to transition between the first mode and the second mode to enable the presenter to selectively determine whether the audience is shown, on the external display, a visual representation of display data which is based on the same application data as that shown on the presenter's local device (first mode - see Figure 5) or whether the audience is shown, on the external display, a visual representation of the preconfigured display data (second mode - see Figure 6), during which time the presenter may execute other applications for display on his or her local device without the audience viewing that application.

In a first example, the processor of the device may be configured to transition between the first and second modes upon receipt of a transition instruction. The transition instruction may be an instruction received at an input interface (such as one or more of: a camera 253, microphone 258, keyboard (not shown), control buttons (not shown), a navigational input device (not shown), a touch-sensitive overlay (not shown)) associated with a touchscreen 204, and an orientation subsystem 249. For instance, the transition instruction could consist of a voice command or hand gesture issued by the presenter and received by the microphone 258 or camera 253, respectively. Alternatively, the transition instruction could be the press of a button of a keyboard, control button or touch-sensitive overlay. Alternatively, the transition instruction could be the detection, by the orientation subsystem 249, of the presenter shaking the local device.

It will be appreciated that, in other embodiments, any form of transition instruction may be received by the input interface to cause the processor to transition between the first and second modes.

In a second example, the processor of the device may be configured to transition between the first and second modes upon detection of a change in the application data on which the first display data is based. For instance, the presenter may cause the local device to cease displaying the presentation and display instead a summary of the slides of the presentation. In this case, whilst the application data on which the first display data is based has changed, the application to which the application data pertains has not changed. Alternatively, the presenter may cause the local device to cease displaying the presentation application, and display instead an email program or web browser, for instance. In this case, the application to which the application data pertains has changed, as well as the application data.

In both of the examples in the above paragraph, the processor may be adapted to detect the change in application data and, upon detecting the change, transition from the first mode to the second mode.

Similarly, the processor may be adapted to transition from the second mode back to the first mode upon detection of a change in the application data on which the first display data is based back to the presentation, when the presenter causes the presentation to be displayed on his or her local device.

It will be appreciated that use of "first" and "second" throughout the specification does not imply an order, and that the device may start in the second mode of operation. In that case, the presenter may cause the processor to transition from the second mode to the first mode, in any manner as explained above or hereafter. In particular, the processor may be configured to operate in the second mode until the presented causes the presentation to be display on the local device.

In a further example, the memory of the device may be configured to store a plurality of flags, each flag corresponding to an application which is executable on the device. These flags may be configurable by the user of the device, and may indicate to the processor which mode of operation the processor should operate in when executing the application corresponding to that flag.

For example, the memory of the device may store a presentation application, an email application and a web browser. The memory of the device may further store a flag corresponding to each of the applications. The flag corresponding to the presentation application may be set to '1', indicating that, when the processor is executing the presentation application, it should operate in the first mode. The flags corresponding to the email application and the web browser may be set to '2' indicating that, when the processor is executing the email application or web browser, it should operate in the second mode.

The processor may be adapted to allow the presenter to configure the flags associated with each application on the device. The processor may furthermore be adapted to override the default mode indicated by the flags and transition from the default mode to an alternative mode upon receipt of a transition instruction or upon detection of a change in the application data on which the first display data is based.

It will be appreciated that whilst a presentation executed with a presentation application has been used in the aforementioned examples, the device, system and method may be practiced on any application executable on an electronic device. Moreover, whilst particular examples of user application data and program application data have been given, the device, system and method may be practiced using alternative sets of application data.

It will furthermore be appreciated that whilst the device, system and method have been described in connection with a tablet computer connected via a wire to a projector, any suitable alternative local device and display device may be used, and these devices may communicate with each other using any suitable alternative media.

## Claims

1. A device (201) for generating display data comprising:
memory (230, 244) configured to store application data (227) including application data pertaining to a first application executable on the device;
an input interface (206) configured to receive input;
a processor (240) in communication with the memory and input interface, the processor configured to communicate with a first display device (204) and a second display device (290), generate and output first display data for display on the first display device, and generate and output second display data for display on the second display device, in accordance with the input;
the processor being configured to:
generate in a first mode the first and second display data based on the application data pertaining to the first application; and
generate in a second mode the first display data based on the application data, and to generate the second display data so as to include preconfigured display data for display on the second device.

2. The device (201) for generating display data according to claim 1, wherein, in the first mode, the first and second display data are the same, and wherein the processor is configured to output the first and second display data to both the first and second display devices for simultaneous display therewith.

3. The device (201) for generating display data according to claim 1 or claim 2, wherein the processor is configured to transition between the first mode and the second mode upon receipt of a transition instruction at the input interface, or upon detection of a change in the application data on which the first display data is based.

4. The device (201) for generating display data according to any preceding claim, wherein the application data includes application data pertaining to a plurality of applications executable on the device, and wherein each application is associated with a flag, the status of which is indicative of the mode in which the processor should operate during execution of the respective application, and wherein the processor is configured to transition between the first mode and the second mode depending on the status of the flag associated with the application being executed on the device.

5. The device (201) for generating display data according to any preceding claim, wherein the preconfigured display data includes components which are derived from one or more of:
a) the first display data;
b) the application data;
c) the application data pertaining to the first application;
d) application data pertaining to one or more of a plurality of applications executable on the device;
e) data pertaining to input received at the input interface; and
f) system data generated by the processor.

6. The device (201) for generating display data according to claim 4 or claim 5, wherein the preconfigured display data includes components which are derived from the first or second display data generated by the processor prior to transitioning from the first mode to the second mode.

7. The device (201) for generating display data according to any preceding claim, wherein the preconfigured display data is generated according to a predefined set of instructions stored in the memory of the device.

8. A system comprising:
a device (201) for generating display data according to any preceding claim; and
first (204) and second (290) display devices configured to receive display data and generate visual representations (500, 502, 510, 512) of the display data.

9. A method for generating display data comprising:
storing application data (227) in a memory (244, 230), the application data including application data pertaining to a first application executable on the device;
receiving input from an input interface (206);
generating, by a processor (240) in communication with the memory and input interface, first display data for display on a first display device (204) and second display data for display on a second display device (290), in accordance with the input;
in a first mode, generating the first and second display data based on the application data pertaining to the first application; and
in a second mode, generating the first display data based on the application data and generating the second display data so as to include preconfigured display data for displaying on the second device.

10. The method for generating display data according to claim 9, wherein, in the first mode, the first and second display data are the same, and further comprising outputting the first and second display data to both the first and second display devices for simultaneous display therewith.

11. The method for generating display data according to claim 9 or claim 10, further comprising either receiving a transition instruction at the input interface or detecting a change in the application data on which the first display data is based; and, upon receipt of the transition instruction or detection of a change, transitioning between the first mode and the second mode.

12. The method for generating display data according to any one of claims 9 to 11, wherein the application data includes application data pertaining to a plurality of applications executable on the device, and wherein each application is associated with a flag, the status of which is indicative of the mode in which the processor should operate during execution of the respective application, further comprising detecting the status of the flag associated with the application being executed on the device and transitioning between the first mode and the second mode based on the status of the flag.

13. The method for generating display data according to any one of claims 9 to 12, further comprising deriving data from one or more of:
a) the first display data;
b) the application data;
c) the application data pertaining to the first application;
d) application data pertaining to one or more of a plurality of applications executable on the device;
e) data pertaining to input received at the input interface; and
f) system data generated by the processor; and
generating components within the preconfigured display data based upon the derived data.

14. The method for generating display data according to any one of claims 9 to 13, further comprising deriving data from the first or second display data generated by the processor prior to transitioning from the first mode to the second mode; and generating components within the preconfigured display data based upon the derived data.

15. A computer program product comprising memory storing computer-executable instructions which, when executed by a processor, cause the processor to perform the method of any one of claims 9 to 14.
